(19) **Europäisches Patentamt / European Patent Office / Office européen des brevets**

(11) **EP 1 863 216 A1**

(12) **EUROPEAN PATENT APPLICATION**
published in accordance with Art. 158(3) EPC

(43) Date of publication:
**05.12.2007 Bulletin 2007/49**

(21) Application number: **05726984.7**

(22) Date of filing: **24.03.2005**

(51) Int Cl.:
*H04L 7/00* (2006.01)  *H04L 12/56* (2006.01)

(86) International application number:
**PCT/JP2005/005424**

(87) International publication number:
**WO 2006/100781 (28.09.2006 Gazette 2006/39)**

(84) Designated Contracting States:
**DE FR GB**

(71) Applicant: **Fujitsu Ltd.**
**Kawasaki-shi, Kanagawa 211-8588 (JP)**

(72) Inventors:
 • **SENBA, Teruhiko,Fujitsu Network Technologies Ltd.**
 **Yokohama-shi, Kanagawa 222-0033 (JP)**

 • **NAMAI, Yuichi,Fujitsu Network Technologies Ltd.**
 **Yokohama-shi, Kanagawa 222-0033 (JP)**
 • **SATO, Hiroyoshi,Fujitsu Network Technologies Ltd.**
 **Yokohama-shi, Kanagawa 222-0033 (JP)**

(74) Representative: **HOFFMANN EITLE**
 **Patent- und Rechtsanwälte**
 **Arabellastrasse 4**
 **81925 München (DE)**

(54) **CELL DECOMPOSING DEVICE, CELL ASSEMBLING DEVICE, AND CLOCK REPRODUCING METHOD**

(57)    Even if a synchronization clock of a transmission network is unstable, a clock of a source signal multiplexed and transmitted can stably reproduced.

The source signal multiplexed into cells is inputted in accordance with the clock which is asynchronous to a network (30). A timing information separation circuit (11) included in a cell disassembly unit (10) separates transmission timing information which is obtained by converting transmission timing in each constant period of the clock of the source signal by the use of transmission timing of a synchronization clock of the network (30) from the cells received. A timing information replacement circuit (12) accepts the transmission timing information separated, averages differentials between adjacent pieces of transmission timing information every predetermined period, and replaces the transmission timing information on the basis of an average differential. A clock generation circuit (13) generates the clock of the source signal multiplexed into the cells on the basis of the transmission timing information replaced by the timing information replacement circuit (12) .

FIG. 1

**Description**

TECHNICAL FIELD

This invention relates to a cell disassembly unit, a cell assembly unit, and a clock reproduction method used for multiplexing a source signal into fixed length cells and transmitting the fixed length cells via a network and, more particularly, to a cell disassembly unit, a cell assembly unit, and a clock reproduction method applied in the case of a source signal having a clock which is asynchronous to a network.

BACKGROUND ART

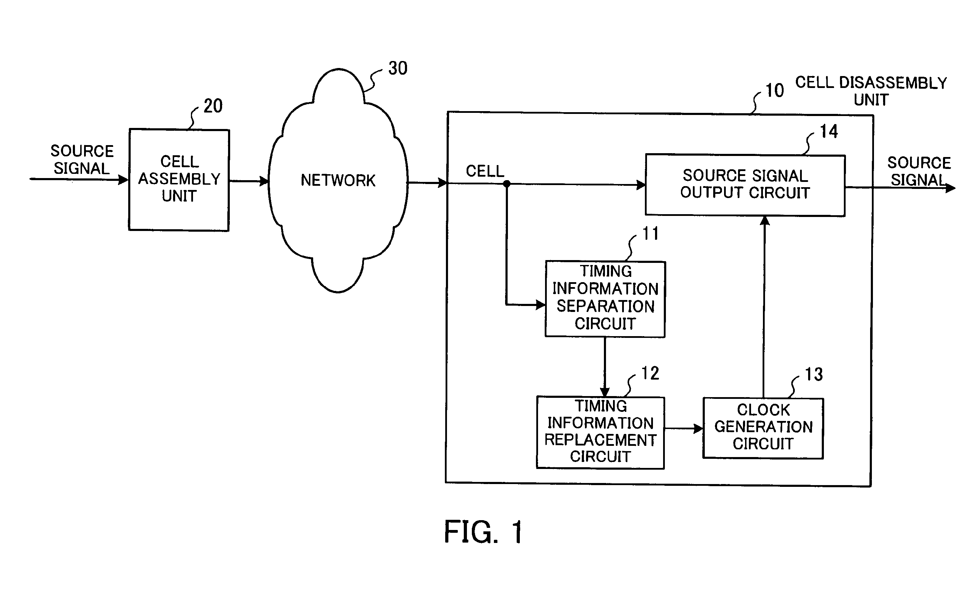

When an asynchronous transfer mode (ATM) transmission network is used for transmitting a constantbit rate (CBR) signal, such as audio or video, which is asynchronous to a clock of the transmission network, clock information for the input CBR signal must be incorporated into ATM cells. With the ATM adaptation layer (AAL) type 1 corresponding to transmission of a CBR signal, the synchronous residual time stamp (SRTS) method in which a time stamp called a residual time stamp (RTS) is generated with the frequency of a network synchronization clock as reference and in which the time stamp is incorporated into ATM cells is adopted.
With the AAL type 1, a cell assembly (CLA) at a sending end in an ATM network converts 3,000 or 3,008 bits included in an input CBR signal into the number of clocks of the network synchronization clock, uses four low order bits of the number as an RTS, incorporates each bit of the RTS into odd ATM cells, and sends these ATM cells. A cell disassembly (CLD) at a receiving end separates the RTS from the ATM cells it receives, reproduces time intervals at which the 3,000 or 3,008 bits included in the CBR signal are outputted, and reproduces a clock of the CBR signal on the basis of the time intervals. By doing so, the CBR signal can be outputted with correct timing.
A clock reproduction device for averaging a differential sequence of received RTSes, generating a clock by frequency-dividing a CBR signal clock by N on the basis of an average, and reproducing the CBR signal clock by a phase locked oscillator (PLO) on the basis of the 1/N frequency-divided clock is disclosed as such a conventional unit at an RTS receiving end (see, for example, patent document 1). With this clock reproduction device, the characteristics of the PLO are improved by making the frequency of the clock inputted to the PLO high.
Patent Document 1: Japanese Patent Laid-Open Publication No. 10-242979 (paragraph nos. [0016] to [0020] and Fig. 1)

DISCLOSURE OF THE INVENTION

PROBLEMS TO BE SOLVED BY THE INVENTION

By the way, even if a clock of a source signal (i.e. a CBR signal) multiplexed at a sending end is stable at the time of sending/receiving ATM cells by the above SRTS method, an ATM network synchronization clock may become unstable due to, for example, frequency variation. As a result, the value of an RTS generated from the network synchronization clock becomes unstable and the frequency of the clock of the source signal reproduced at a receiving end becomes unstable. In such a case, the following problems, for example, arise. Operation, such as a level conversion, cannot be performed at a stage where the source signal reproduced is outputted. Reproduced video signals, audio signals, and the like do not have required characteristics and output quality deteriorates.
The present invention was made under the background circumstances described above. An object of the present invention is to provide a cell disassembly unit capable of stably reproducing a clock of a source signal multiplexed and transmitted even in the case of a transmission network synchronization clock being unstable.
Another object of the present invention is to provide a cell assembly unit capable of stably reproducing a clock of a source signal at a receiving end even in the case of multiplexing the source signal into cells and transmitting the cells at the time of a transmission network synchronization clock being unstable.
Still another object of the present invention is to provide a clock reproduction method capable of stably reproducing a clock of a source signal multiplexed and transmitted even in the case of a transmission network synchronization clock being unstable.

MEANS TO SOLVE THE PROBLEMS

In order to solve the above problems, a cell disassembly unit 10 shown in Fig. 1 is provided by the present invention. The cell disassembly unit 10 separates and reproduces a source signal having a clock which is asynchronous to a network 30 from fixed length cells received via the network 30. The cell disassembly unit 10 comprises a timing information separation circuit 11 for separating transmission timing information which is obtained by converting transmission timing in each constant period of the clock of the source signal by the use of transmission timing of a synchronization clock of the network 30 from the fixed length cells received, a timing information replacement circuit 12 for averaging differentials between adjacent pieces of transmission timing information sent from the timing information separation circuit 11 every predetermined period and for replacing the transmission timing information on the basis of an average differential, and a clock generation circuit 13 for generating the clock of the source signal on the basis of the replaced transmission timing information.

The source signal is inputted in accordance with a clock which is asynchronous to the network 30 used for transmission. The source signal and the transmission timing information which is obtainedby converting transmission timing in each constant period of the clock of the source signal by the use of transmission timing of the synchronization clock of the network 30 are multiplexed into the cells and are sent to the network 30. When the cells are received, the timing information separation circuit 11 included in the cell disassembly unit 10 separates the transmission timing information from the cells received. The timing information replacement circuit 12 accepts the transmission timing information separated, averages differentials between adjacent pieces of transmission timing information every predetermined period, and replaces the transmission timing information on the basis of an average differential. As a result, variations in the transmission timing information are suppressed. The clock generation circuit 13 generates the clock of the source signal multiplexed into the cells on the basis of the transmission timing information replaced by the timing information replacement circuit 12.

A cell assembly unit for multiplexing a source signal having a clock which is asynchronous to a network used for transmission into fixed length cells and for sending the fixed length cells to the network, comprising a timing information generation circuit for generating transmission timing information which is obtained by converting transmission timing in each constant period of the clock of the source signal by the use of transmission timing of a synchronization clock of the network, a timing information replacement circuit for averaging differentials between adjacentpieces of transmission timing information sent from the timing information generation circuit every predetermined period and for replacing the transmission timing information on the basis of an average differential, and a cell multiplexing circuit for multiplexing the source signal and the transmission timing information replaced into the cells is provided by the present invention.

The timing information generation circuit generates the transmission timing information which is obtained by converting transmission timing in each constant period of the clock of the source signal by the use of transmission timing of the synchronization clock of the network. The timing information replacement circuit averages differentials between adjacent pieces of transmission timing information sent from the timing information generation circuit every predetermined period and replaces the transmission timing information on the basis of an average differential. As a result, variations in the transmission timing information are suppressed. The cell multiplexing circuit multiplexes the source signal and the transmission timing information replaced by the timing information replacement circuit into the cells.

EFFECTS OF THE INVENTION

With the cell disassembly unit according to the present invention, transmission timing information separated from cells received is replaced on the basis of a value obtained by averaging differentials between adjacent pieces of transmission timing information every predetermined period. As a result, variations in the transmission timing information are suppressed. A clock of a source signal multiplexed into the cells is generated on the basis of the transmission timing information . Therefore, even if the transmission timing information is generated at an end from which the cells are sent on the basis of an unstable network synchronization clock, the clock of the source signal can stably be reproduced from the cells received.

In addition, with the cell assembly unit according to the present invention transmission timing information generated is replaced on the basis of a value obtainedby averaging differentials between adjacent pieces of transmission timing information every predetermined period. As a result, variations in the transmission timing information are suppressed. The transmission timing information is multiplexed into cells. A clock of a source signal multiplexed into the cells is generated at an end at which the cells are received on the basis of the transmission timing information in which variations are suppressed. Therefore, even if the transmission timing information is generated on the basis of an unstable network synchronization clock, the clock of the source signal can stably be reproduced from the cells at the receiving end.

The above and other objects, features and advantages of the present invention will become apparent from the following description when taken in conjunction with the accompanying drawings which illustrate preferred embodiments of the present invention by way of example.

BRIEF DESCRIPTION OF THE DRAWINGS

Fig. 1 is a view for giving an overview of a cell disassembly unit according to the present invention.
Fig. 2 is a view showing an example of the configuration of a network system according to a first embodiment of the present invention.

Fig. 3 is a view showing the data structure of an ATM cell transmitted to an ATM network.

Fig. 4 is a view showing the internal structure of a CLAD of an ATM unit at a sending end in the network system according to the first embodiment of the present invention.

Fig. 5 is a view showing the internal structure of a CLAD of an ATM unit at a receiving end in the network system according to the first embodiment of the present invention.

Fig. 6 is a view showing an example of numeric values used in a first RTS replacement process.

Fig. 7 is a view showing an example of a conversion table.

Fig. 8 is a view showing an example of numeric values used in a second RTS replacement process.

Fig. 9 is a view showing the internal structure of a CLAD of an ATM unit at a sending end in a network system according to a second embodiment of the present invention.

Fig. 10 is a view showing an example of numeric values of RTSes generated by the CLAD at the sending end in the network system according to the second embodiment of the present invention.

Fig. 11 is a view showing the internal structure of a CLAD of an ATM unit at a receiving end in the network system according to the second embodiment of the present invention.

Fig. 12 is a view showing the internal structure of a CLAD of an ATM unit at a sending end in a network system according to a third embodiment of the present invention.

Fig. 13 is a view showing the internal structure of a CLAD of an ATM unit at a receiving end in a network system according to a fourth embodiment of the present invention.

Fig. 14 is a view showing an example of the internal structure of a varying frequency measuring circuit.

Fig. 15 is a timing chart showing an example of a signal transmitted in the varying frequency measuring circuit.

Fig. 16 is a view showing an example of the numeric values of RTSes in the CLAD at the receiving end in the network system according to the fourth embodiment of the present invention.

Fig. 17 is a view showing an example of the configuration of a network system according to a fifth embodiment of the present invention.

Fig. 18 is a view showing an example of the internal structure of a CLAD of an ATM unit at a receiving end in the network system according to the fifth embodiment of the present invention.

Fig. 19 is a timing chart showing an example of input-output data and a replacement cycle control in the CLAD at the receiving end in the network system according to the fifth embodiment of the present invention.

BEST MODE FOR CARRYING OUT THE INVENTION

Embodiments of the present invention will now be described in detail with reference to the drawings.

Fig. 1 is a view for giving an overview of a cell disassembly unit according to the present invention.

A cell disassembly unit 10 shown in Fig. 1 receives cells sent from a cell assembly unit 20 via a network 30, separates a source signal multiplexed into the cells, and outputs the source signal. The network 30 is used for transmitting data in fixed length cells such as ATM cells. The source signal transmitted is, for example, a CBR signal transmitted at a constant rate, and has a clock which is independent of a synchronization clock of the network 30.

To make it possible to reproduce such a source signal with correct timing at a receiving end, the cell assembly unit 20 generates transmission timing information which is obtained by converting transmission timing in each constant period of the clock of the source signal by the use of transmission timing of the synchronization clock of the network 30, multiplexes the source signal and this transmission timing information into cells, and sends the cells. As a result, the cell disassembly unit 10 at the receiving end reproduces the clock of the source signal on the basis of the transmission timing information. This clock can be used for reproducing the source signal.

With such a system the synchronization clock of the network 30 may become unstable because of, for example, frequency variation. In the case where the synchronization clock of the network 30 is unstable when the cell assembly unit 20 multiplexes the source signal into the cells, the cycle of the transmission timing information generated on the basis of the synchronization clock of the network 30 is not constant. This also applies to the case where the clock of the original source signal is stable. A synchronization signal of the source signal which the cell disassembly unit 10 reproduces on the basis of the unstable transmission timing information also becomes unstable. As a result, the quality of the source signal outputted deteriorates or the source signal cannot be outputted.

To solve these problems, the cell disassembly unit 10 shown in Fig. 1 has the function of stabilizing the transition (change) of the transmission timing information separated from the cells and reproduces the clock of the source signal on the basis of the stabilized transmission timing information. By doing so, the clock reproduced is stabilized and the quality of the source signal outputted is improved.

As shown in Fig. 1, the cell disassembly unit 10 comprises a timing information separation circuit 11, a timing information replacement circuit 12, a clock generation circuit 13, and a source signal output circuit 14. The timing information separation circuit 11 separates the above transmission timing information from the cells which the cell disassembly unit 10 receives via the network 30 and supplies the transmission timing information to the timing information replacement circuit 12.

The timing information replacement circuit 12 replaces the transmission timing information separated from the cells on the basis of a value obtained by averaging differentials between adjacent pieces of transmission timing information every predetermined period. As a result, variations in the differentials in the predetermined period are smoothed and the differentials in the predetermined period vary only in the neighborhood of the average of the differentials. Therefore, the value of the transmission timing information increases (or decreases) linearly.

The clock generation circuit 13 generates the clock of the source signal multiplexed into the cells on the basis of the transmission timing information replaced by the timing information replacement circuit 12. The clock generation circuit 13 includes, for example, a PLL circuit for accepting input of a clock the cycle of which is indicated by the replaced transmission timing information and for generating the clock of the source signal. The PLL circuit generates a clock obtained by multiplying a frequency corresponding to the replaced transmission timing information and an integer together, and outputs the clock as the clock of the source signal.

The source signal output circuit 14 outputs the source signal separated from the cells received in synchronization with the clock generated by the clock generation circuit 13. As a result, the source signal is reproduced.

By adopting the cell disassembly unit 10 having the above structure, the timing information replacement circuit 12 stabilizes the transition of the transmission timing information even if the value of the transmission timing information multiplexed into the cells received is unstable. As a result, the clock generation circuit 13 can generate a stable clock. Therefore, even if the synchronization signal of the network 30 is unstable at sending time, the source signal separated from the cells received can stably be reproduced.

The above timing information replacement circuit may be located not at the end where the cells are received but at the end where the cells are sent. To be concrete, in the cell assembly unit 20 at the sending end the timing information replacement circuit replaces the transmission timing information generated on the basis of the synchronization clock of the network 30 and multiplexes the source signal and the replaced transmission timing information into the cells. As a result, even if the synchronization clock of the network 30 is unstable, the transition of the transmission timing information multiplexed into the cells is stabilized. Therefore, the cell disassembly unit 10 at the receiving end can stably reproduce the clock of the source signal.

Embodiments of the present invention will now be described more concretely. In a system which is described in each of the following embodiments as an example and to which the present invention is applied, a source signal which is a video signal, the frequency fs of a clock of which is 143.1818... MHz, and which meets the business digital video standards called "D2" is transmitted via an ATM network which is based on Synchronous Digital Hierarchy (SDH) and the frequency fn of a network synchronization clock of which is 155.52 MHz by the use of cells which meet the AAL Type 1 standards.

(First Embodiment)

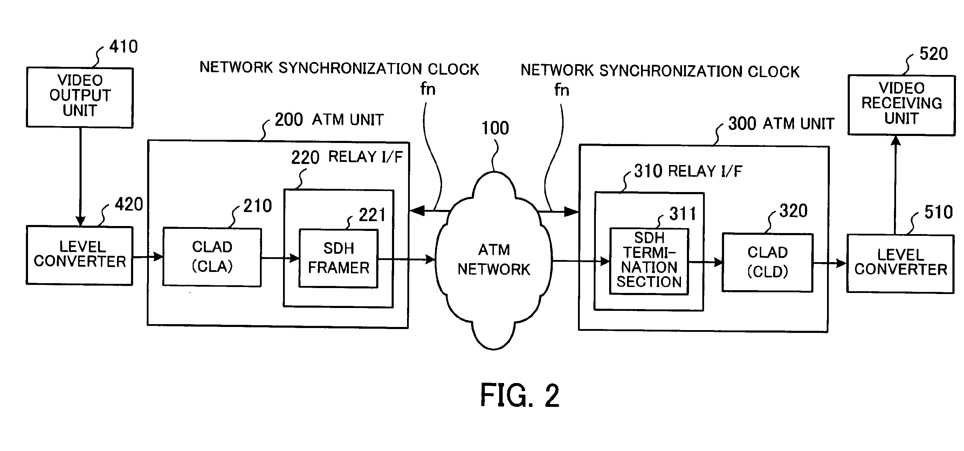

Fig. 2 is a view showing an example of the configuration of a network system according to a first embodiment of the present invention.

A network system shown in Fig. 2 is used for transmitting a D2 video signal via an ATM network 100 based on SDH. An ATM unit 200 at a sending end and an ATM unit 300 at a receiving end are connected to the ATM network 100. A video output unit 410 and a level converter 420 are connected to the ATM unit 200 at the sending end. A level converter 510 and a video receiving unit 520 are connected to the ATM unit 300 at the receiving end.

The video output unit 410 outputs the D2 video signal which is a source signal, and is a transmitter, repeater, or the like located in a broadcasting station. The level of the D2 video signal outputted from the video output unit 410 is converted by the level converter 420 so that the D2 video signal can be processed by the ATM unit 200. The D2 video signal is then supplied to the ATM unit 200.

The ATM unit 200 at the sending end includes a cell assembly and disassembly (CLAD) 210 and a relay interface (I/F) 220. The CLAD 210 has at least the CLA function of generating ATM cells from input data. With this system the CLAD 210 generates ATM cells from the digital video signal supplied from the level converter 420 in accordance with the AAL Type 1 standards. The relay I/F 220 has at least the function of an SDH framer 221 which multiplexes the ATM cells generated by the CLAD 210 and which sends the ATM cells to the ATM network 100.

On the other hand, the ATM unit 300 at the receiving end includes a relay I/F 310 and a CLAD 320. The relay I/F 310 has at least the function of an SDH termination section 311 which separates the necessary ATM cells from the signal received from the ATM network 100. The CLAD 320 has at least the CLD function of disassembling the ATM cells separated by the relay I/F 310 . With this system the D2 video signal is separated from the ATM cells as a source signal and is outputted.

The level of the D2 video signal outputted from the ATM unit 300 is converted by the level converter 510 so that the D2 video signal will meet standards for transmission to the video receiving unit 520. The D2 video signal is then received by the video receiving unit 520. The video receiving unit 520 uses the D2 video signal transmitted, and is a receiver, a video reproducer, or the like located in a broadcasting station.

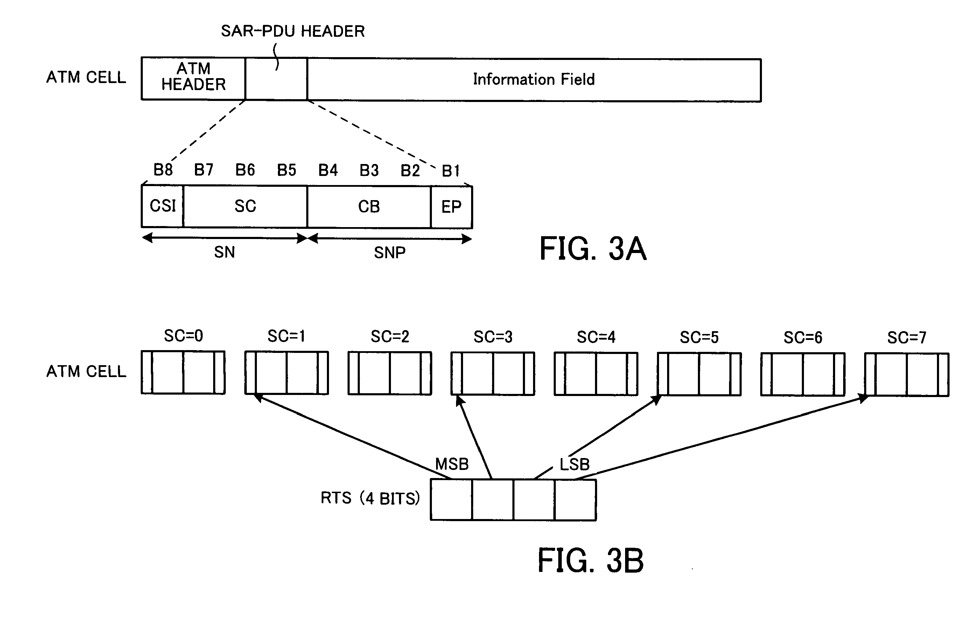

Fig. 3 is a view showing the data structure of an ATM cell transmitted to the ATM network 100.

As shown in Fig. 3 (A), a 1-byte SAR(segmentation and reassembly)-PDU (protocol data unit) header and a 47-byte information field used for transmitting user data (D2 video signal in this example) are located after a 5-byte ATM header in an ATM cell which meets the AAL Type 1 standards. The 1-byte SAR-PDU header includes a 4-bit sequence number (SN) field and a 4-bit sequence number protection (SNP) field.

The SN field is divided into a 1-bit convergence sublayer identifier (CSI) and a 3-bit sequence count (SC). The SNP field is divided into a 3-bit control bias (CB) field and 1-bit even parity (EP). The SC in the SN field shows a count value which indicates the sequence number of an ATM cell and which circulates in the order of 0 to 7. The SC is used for checking the order of a cell. The SNP field has the function of detecting and correcting an error in the SN.

The CSI bit is used for transmitting and reproducing timing information regarding a clock of a source signal in the SRTS method, that is to say, an RTS. As shown in Fig. 3(B), an RTS is made up of four bits. Clocks of a source signal are counted at a sending end. When a count value reaches a predetermined number of bits, four low order bits of the count value are used as an RTS. A multiframe technique using eight ATM cells is adopted for an RTS. When an SC value is an odd number, that is to say, 1, 3, 5, or 7, each of four bits which make up an RTS is set in the CSI and is transmitted.

With the above ATM cell user data is transmitted by the use of the 47-byte information field. Accordingly, the number of bits included in user data corresponding to eight cells is 3,008 (8 cells x 47 bytes x 8 bits).

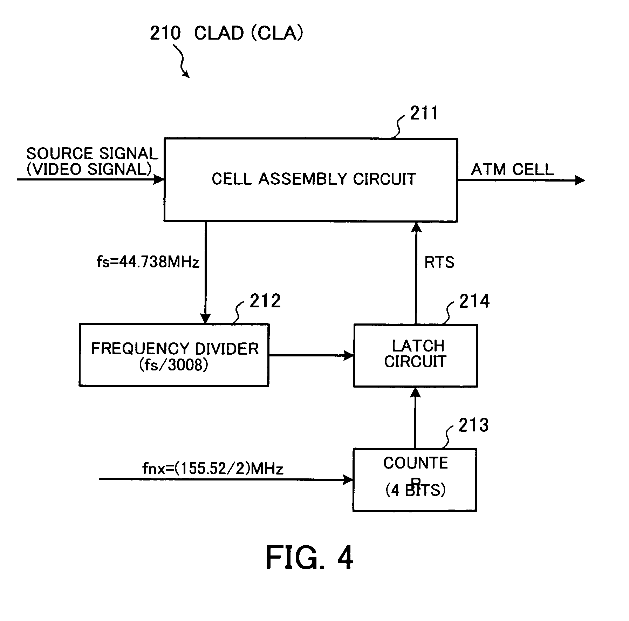

Fig. 4 is a view showing the internal structure of the CLAD 210 of the ATM unit 200 at the sending end.

The CLAD 210 at the sending end has a general structure which has traditionally been used. As shown in Fig. 4, the CLAD 210 includes a cell assembly circuit 211, a frequency divider 212, a counter 213, and a latch circuit 214.

The cell assembly circuit 211 generates ATM cells from the D2 video signal inputted. As stated above, the cell assembly circuit 211 incorporates an RTS sent from the latch circuit 214 into ATM cells and outputs the RTS. The frequency divider 212 frequency-divides a clock (hereinafter referred to as the source clock) of the input video signal, which is a source signal, by 3,008 that is the block length (count of source clocks) of the video signal corresponding to an RTS generation interval.

The counter 213 is a 4-bit counter for counting reference frequencies fnx (fn/2 in this example) obtained from a synchronization clock (hereinafter referred to as the network synchronization clock) of the ATM network 100. The counter 213 supplies a count value synchronized with the network synchronization clock to the latch circuit 214. The latch circuit 214 latches the count value supplied from the counter 213 on the basis of a frequency division clock of the frequency divider 212. The latch circuit 214 generates RTSes obtained by converting transmission time per block length (3,008 bits) of video signal by the use of a clock the reference frequency of which is fnx. The cell assembly circuit 211 multiplexes the input video signal and the RTSes into the ATM cells.

The ATM unit 200 at the sending end multiplexes the RTSes into the ATM cells in the above way. As a result, the ATM unit 300 at the receiving end can reproduce the source clock on the basis of the RTSes and output the transmitted video signal with correct timing in synchronization with the source clock. The ATM unit 300 at the receiving end can derive the frequency of the source clock on the basis of the difference between adjacent RTSes.

The difference between adjacent RTSes at the sending end is given by the following equation (1) and the frequency of the source clock can be calculated at the receiving end by using equation (2).

**[Expression 1]**

$$Y = \frac{3008 \times fnx\_cla}{fs\_cla} + 16 \times X \qquad \ldots\ldots (1)$$

$$fs\_cld = \frac{3008 \times fnx\_cld}{16 \times X + Y} \qquad \ldots\ldots (2)$$

where Y is the difference between adjacent RTSes, fnx_cla and fnx_cld are reference frequencies obtained from the network synchronization clock at the sending end and the receiving end respectively, fs_cla is the frequency of the source clock of the input video signal at the sending end, fs_cld is the frequency of the source clock of the output video signal at the receiving end, and the value of the coefficient X is 204.

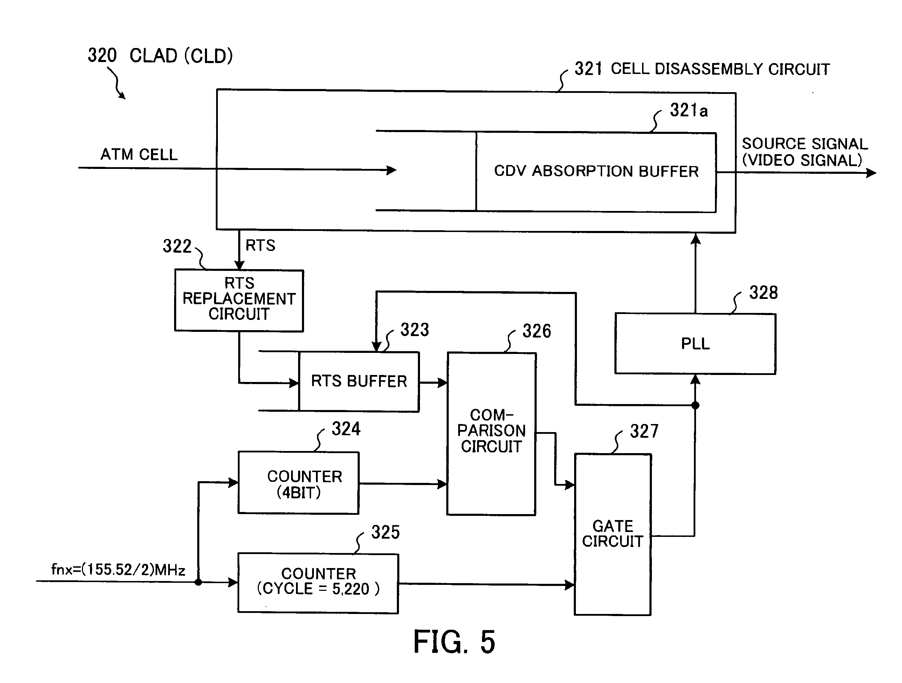

However, if the reference frequency fnx cla obtained from the network synchronization clock becomes unstable at the sending end, the RTSes generated make transition, that is to say, the difference Y between adjacent RTSes becomes unstable even though the frequency fs_cla of the source clock is stable. In this case, the frequency fs_cld of the source clock reproduced at the receiving end also becomes unstable. As a result, the quality of the video signal reproduced deteriorates. In addition, there is a possibility that the level converter 510 cannot receive data. To avoid such situations in this embodiment, the CLAD 320 at the receiving end includes an RTS replacement circuit by which the transition of the RTS is stabilized and by which the source clock can stably be reproduced. This is shown in Fig. 5.

Fig. 5 is a view showing the internal structure of the CLAD 320 of the ATM unit 300 at the receiving end.

As shown in Fig. 5, the CLAD 320 at the receiving end includes a cell disassembly circuit 321, a RTS replacement circuit 322, an RTS buffer 323, counters 324 and 325, a comparison circuit 326, a gate circuit 327, and a phase locked loop (PLL) 328.

The cell disassembly circuit 321 extracts the source signal or the video signal from the ATM cells received via the ATM network 100. The cell disassembly circuit 321 includes a cell delay variation (CDV) absorption buffer 321a. The cell disassembly circuit 321 stores the received ATM cells once in the CDV absorption buffer 321a to absorb variations in cell delays. The cell disassembly circuit 321 outputs the video signal by the use of a reproduced clock outputted from the PLL 328. In addition, the cell disassembly circuit 321 separates the RTS from the received ATM cells and supplies the RTS to the RTS replacement circuit 322.

The RTS replacement circuit 322 receives the RTS separated, replaces the value of the RTS so as to stabilize transition in predetermined time, and outputs the RTS. As described later, the RTS replacement circuit 322 replaces differentials between adjacent RTSes every predetermined time to smooth the transition (change) of the differentials between the adjacent RTSes, and recalculates the RTSes on the basis of the replaced differentials. By doing so, the transition of the RTS is stabilized.

The RTS buffer 323 temporarily stores the replaced RTS and outputs the RTS to the comparison circuit 326 in synchronization with the timing with which the gate circuit 327 outputs a signal. The counter 324 is a 4-bit counter for counting the number of clocks which are obtained from the network synchronization clock of the ATM network 100 and the reference frequency of which is fnx, and supplies a count value to the comparison circuit 326. The counter 325 counts the number of the clocks the reference frequency of which is fnx in a cycle of 5,220 (error of 8 is allowed in this conversion) obtained by converting a transmission cycle per block length (3,008 bits in this example) of source signal by the use of the reference frequency fnx and determines a cycle in which the RTSes are reproduced.

The comparison circuit 326 compares the value of the RTS outputted from the RTS buffer 323 with a count value of the counter 324. When these values match, the comparison circuit 326 outputs a pulse. The gate circuit 327 inhibits the result of the comparison made by the comparison circuit 326 until a count value of the counter 325 become zero. The gate circuit 327 reproduces RTS transmission timing, that is to say, signal timing obtained by dividing the frequency of the clock of the source signal by 3,008. The PLL 328 reproduces the source clock on the basis of the signal outputted from the gate circuit 327. The source signal (video signal) is reproduced from the CDV absorption buffer 321a of the cell disassembly circuit 321 in synchronization with the source clock reproduced.

A replacement process performed by the RTS replacement circuit 322 will now be described by giving two examples. In one example, a conversion table of RTS differentials is used. In the other example, RTS differentials are replaced by operations.

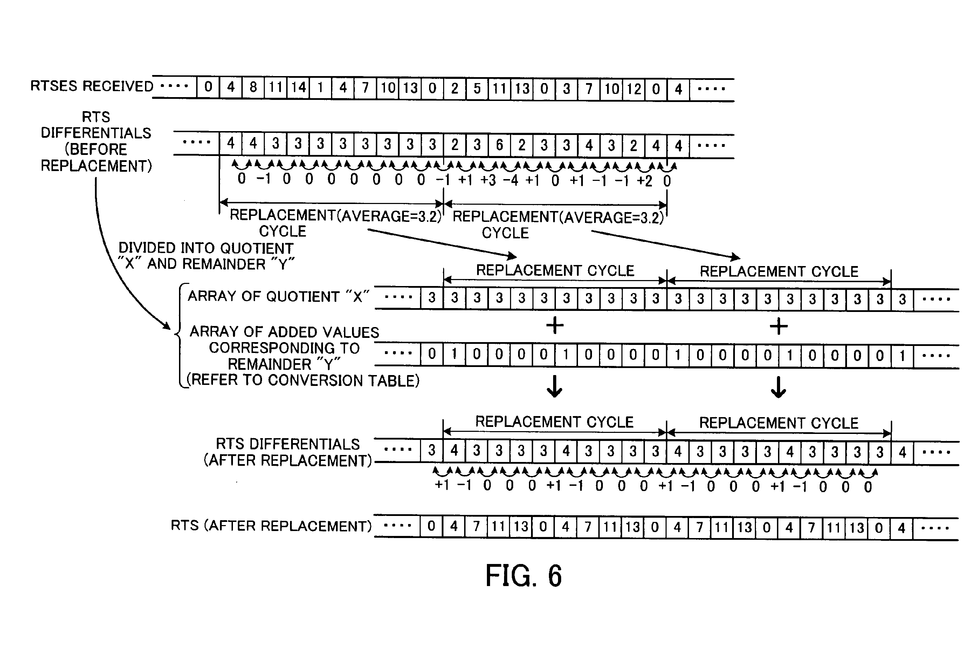

Fig. 6 is a view showing an example of numeric values used in a first RTS replacement process.

In Fig. 6, the values of RTSes, RTS differentials, and the like are decimal numbers. Ideally, the RTS differentials should be constant. In the example shown in Fig. 6, however, the RTS differentials separated from ATM cells vary in the maximum range of $\pm 4$. That is to say, it turns out that the RTSes make an unstable transition. The RTS replacement circuit 322 adds up the RTS differentials in a predetermined cycle, refers to a conversion table stored in advance, and replaces RTSes within the cycle to smooth the transition of the RTS differentials. In the following descriptions a unit cycle in which RTSes are replaced is referred to as a replacement cycle. In Fig. 6, an RTS reaches ten times in a replacement cycle.

The following equation (3) holds.

**[Expression 2]**

$$N \cdot Rav = \sum_{n=1}^{N} R(n) = Nx + y$$

. . . . . (3)

where N is the number of times an RTS reaches in the replacement cycle, Rav is the average of differentials of N RTSes, and R(n) is a differential of an RTS which reaches the nth time in the replacement cycle.

On the basis of equation (3), the RTS differentials in the replacement cycle are divided once into the quotient "x" and the remainder "y" included in equation (3), the remainder "y" is divided into the smallest units, and an array in which the smallest units scatter in the replacement cycle is extracted from the conversion table. The extracted array is added to an array of the quotient "x". By doing so, new stabilized RTS differentials are generated. The quotient "x" corresponds to an integral portion of the average of the N RTS differentials and the remainder "y" corresponds to a value at the first decimal place of the average (value at the second decimal place is raised to a unit).

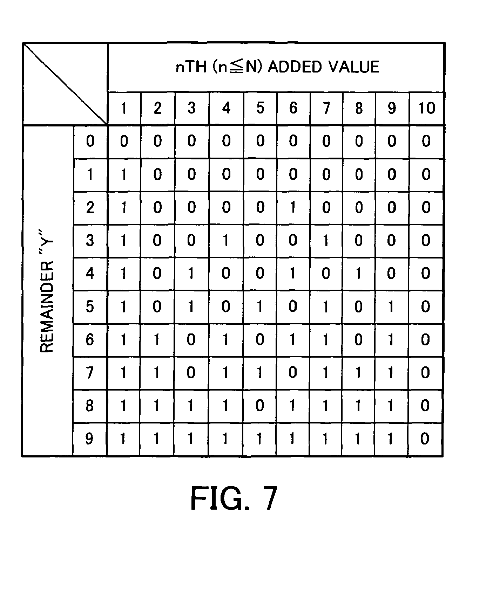

Fig. 7 is a view showing an example of a conversion table.

As shown in Fig. 7, the conversion table includes an array of values added to the array of the quotient "x" according to value of the remainder "y". In each of the arrays of added values, the smallest units ("1" in this example) into which the remainder "y" is divided are dispersed uniformly among N array elements. By adding such an array of added values to the array of the quotient "x, " variations in the N RTS differentials are minimized and points where the variations occur (that is to say, points where a differential is larger by one) are dispersed.

In the example shown in Fig. 6, the remainder "y" is 2. Accordingly, the array of added values of "1,0,0,0,0,1,0,0,0,0" is obtained from the conversion table. This array is added to the array of the quotient "x" to replace the RTS differentials. The replaced differentials are added in order to the value of the last RTS in the preceding replacement cycle by a 4-bit counter to regenerate N (ten in this example) RTSes . As a result, the RTSes after the replacement change more linearly than the original RTSes.

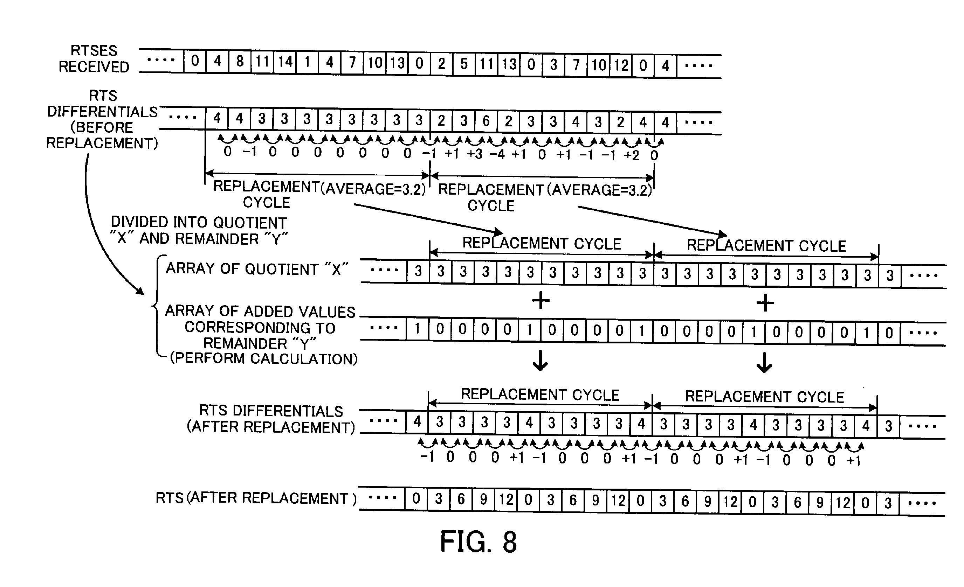

Fig. 8 is a view showing an example of numeric values used in a second RTS replacement process.

In Fig. 8, the same RTSes that are shown in Fig. 6 are separated from ATM cells . In the second RTS replacement process, the quotient "x" and the remainder "y" are calculated by the above equation (3) and are applied to the following equation (4). By doing so, N RTS differentials are calculated and replacement is performed. As a result, the range of variations in the N RTS differentials is suppressed and points where the variations occur are dispersed.

**[Expression 3]**

$$Rav(n) = x + rounddown\left\{\frac{ny}{N}\right\} - rounddown\left\{\frac{(n-1)y}{N}\right\} \qquad \ldots\ldots (4)$$

where Rav(n) is a differential of an nth RTS (value after the replacement) in a replacement cycle and rounddown (A/B) indicates an integral portion obtained by omitting the decimal fraction after the decimal point of the quotient of (A/B). In equation (4), an array of added values to be added to an array of the quotient "x" is obtained by the second and third terms of the right side. In the example shown in Fig. 8, the array of added values is "0,0,0,0,1,0,0,0,0,1". Accordingly, the N RTS differentials are replaced by equation (4) so that the points where the variations occur (that is to say, the points where a differential is larger by one) will be dispersed. N RTSes which linearly change are regenerated on the basis of the replaced RTS differentials. This is the same with the first RTS replacement process.

As stated above, the RTS replacement circuit 322 replaces the values of every N RTSes separated from the received ATM cells so that they will change more linearly. The RTSes after the replacement are stored in the RTS buffer 323 and time intervals indicated by the RTSes are reproduced by the comparison circuit 326 and the gate circuit 327 on the basis of the reference frequency fnx. The RTSes are stabilized, so intervals between signals outputted from the gate circuit 327 are approximately constant. As a result, the PLL 328 can stably reproduce the source clock. The CDV absorption buffer 321a of the cell disassembly circuit 321 outputs the source signal in synchronization with the source clock outputted from the PLL 328. Accordingly, the source signal is reproduced with correct timing and the quality of the source signal reproduced is improved.

By the way, it is known that the frequency of the network synchronization clock of the ATM network 100 periodically varies. RTS differentials also vary periodically and significantly according to the frequency variations. In the example shown in Fig. 6 or 8, for example, the point where the RTS differentials significantly vary in the range of +3 to -4 appears. Such a point periodically appears in an actual system. Therefore, it is desirable that a cycle in which RTS differentials are replaced and which corresponds to the number N of times an RTS reaches should be longer than or equal to the above variation cycle in the RTS replacement circuit 322 . By smoothing the variations in the RTS differentials in a cycle which is longer than or equal to the variation cycle, the transition of the RTSes can be stabilized for a long time. In other words, the CLAD 320 according to this embodiment includes the RTS replacement circuit 322. Accordingly, it is a characteristic of the CLAD 320 that the CLAD 320 can accommodate a great variation which periodically appears.

As a result, a high-quality source signal can always be reproduced from the received ATM cells regardless of variations in the network synchronization clock.

(Second Embodiment)

In the above first embodiment of the present invention, the RTSes separated from the ATM cells are replaced at the receiving end of the ATM cells so that they will make a stable transition. However, such a replacement process may be performed at the sending end of the ATM cells. By doing so, the same effect, that is to say, the effect of stabilizing the source clock reproduced at the receiving end can be obtained.

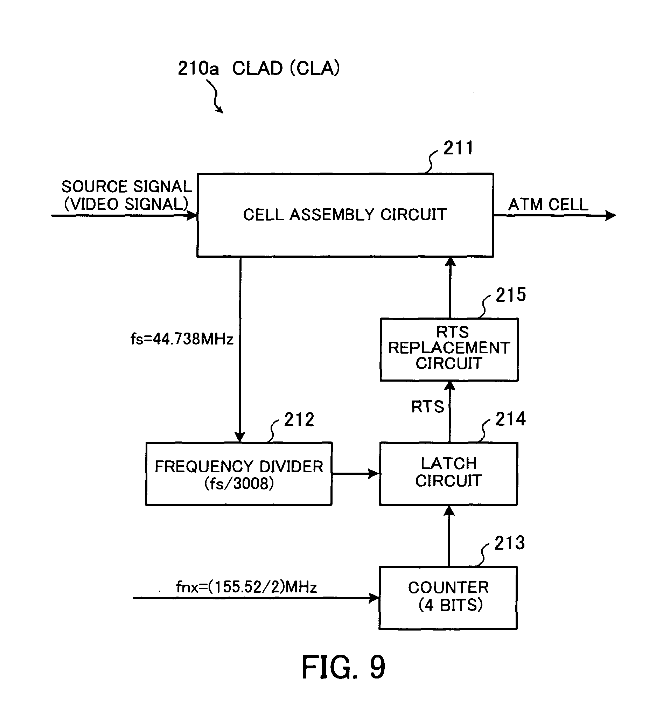

Fig. 9 is a view showing the internal structure of a CLAD of an ATM unit 200 at a sending end in a network system according to a second embodiment of the present invention. Components in Fig.9 that are the same as those shown in Fig. 4 are marked with the same symbols and descriptions of them will be omitted.

A CLAD 210a shown in Fig. 9 is obtained by adding an RTS replacement circuit 215 to the CLAD 210 which is shown in Fig. 4 and which has traditionally been used. The RTS replacement circuit 215 replaces the value of an RTS generated by a latch circuit 214 so that transition in predetermined time will be stable. The RTS replacement circuit 215 then outputs the RTS. To perform a replacement process, the method which is described in Fig. 6 and in which the conversion table is used or the method which is described in Fig 8 and in which operations are performed is used. That is to say, differentials between adjacent RTSes are replaced every predetermined period so as to smooth the transition of RTS differentials. RTSes are recalculated on the basis of the replaced differentials. By doing so, the transition of the RTSes is stabilized. A cell assembly circuit 211 puts a source signal into the information fields of ATM cells, puts the RTSes stabilized by the RTS replacement circuit 215 into the CSI bits of the ATM cells, and sends the ATM cells to an ATM network 100 via a relay I/F 220.

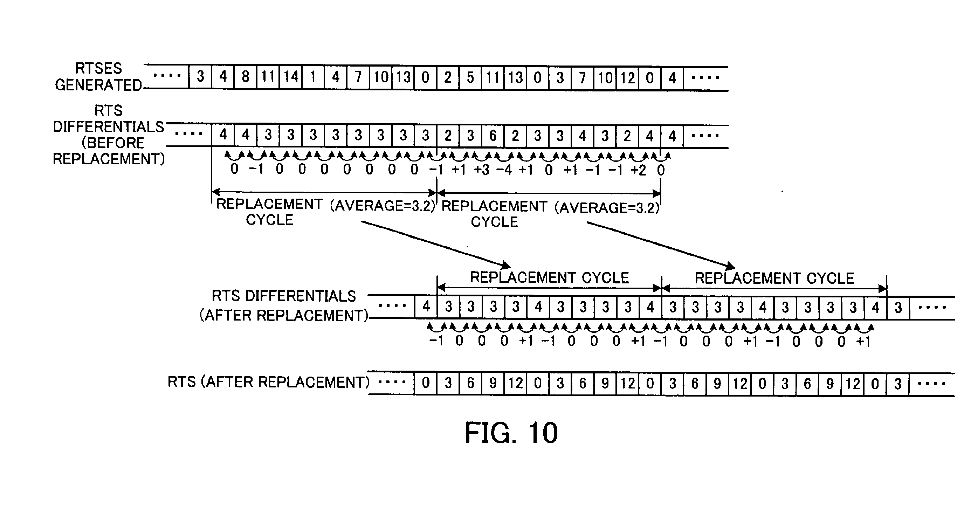

Fig. 10 is a view showing an example of numeric values of RTSes generated by the CLAD 210a.

Of the above methods for performing an RTS replacement process, the method in which values used for replacing RTSes are calculated by performing operations by the use of equation (4) is shown in Fig. 10. When a network synchronization clock becomes unstable, counting performed by a counter 213 of the CLAD 210a at the sendingendbecomes unstable andanRTS generation interval becomes unequal. In the example shown in Fig. 10, differentials between RTSes generated vary in the maximum range of -4 to +3 by this factor.

As a result of the process performed by the RTS replacement circuit 215, the range of variations in every N (N=10 in this example) RTS differentials is minimized and points where the variations occur are dispersed. In the example shown in Fig. 10, the quotient "x" and the remainder "y" included in equation (3) are 3 and 2 respectively. By applying the quotient "x" and the remainder "y" to equation (4), the points where the RTS differentials vary are dispersedly located fifth and tenth. As a result, the RTSes after the replacement change more linearly.

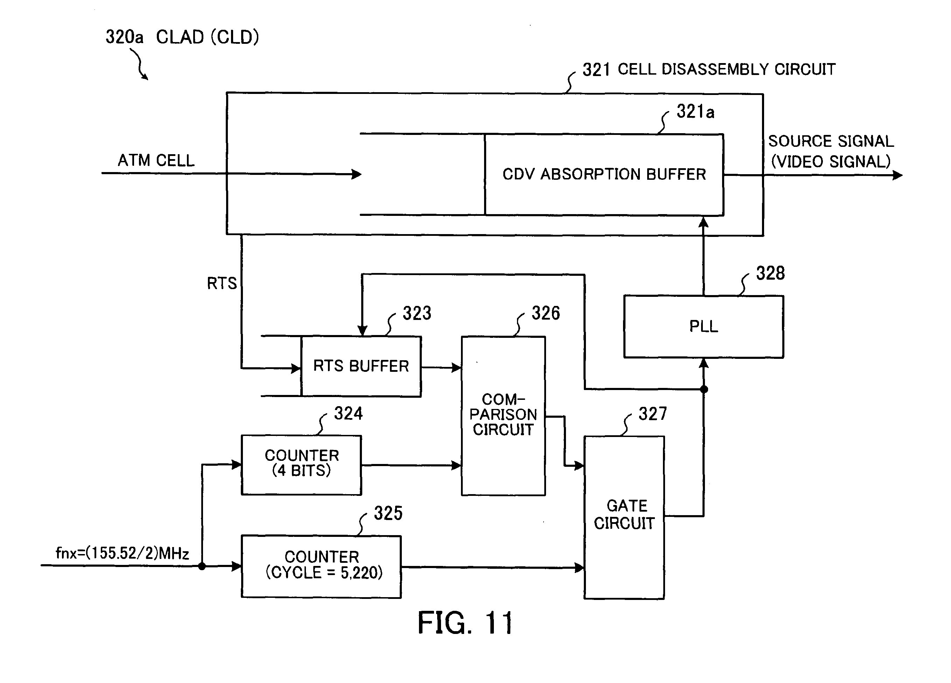

Fig. 11 is a view showing the internal structure of a CLAD of an ATM unit 300 at a receiving end in the network system according to the second embodiment of the present invention. Components in Fig .11 that are the same as those shown in Fig. 5 are marked with the same symbols and descriptions of them will be omitted.

A CLAD 320a shown in Fig. 11 is a unit which has traditionally been used, and differs from the CLAD 320 shown in Fig. 5 in that it does not include the RTS replacement circuit 322. That is to say, a cell disassembly circuit 321 separates the RTSes from the ATM cells received. The RTSes are stored in an RTS buffer 323. Intervals at which the RTSes were generated are reproduced from the RTSes outputted from the RTS buffer 323, and the source clock is reproduced by a PLL 328. In this embodiment the RTSes are multiplexed into the ATM cells in a state in which transition is stabilized at the sending end, so the RTSes received are used in their original condition at the receiving end. By doing so, the source clock can stably be reproduced and the quality of the source signal reproduced is improved.

As is the same with the first embodiment, it is desirable that a replacement cycle in which the CLAD 210a at the sending end performs the RTS replacement process should be longer than or equal to a cycle in which the RTS differentials vary. As a result, the CLAD 320a at the receiving end can always reproduce a high-quality source signal from the received ATM cells regardless of variations in the network synchronization clock.

(Third Embodiment)

A network synchronization clock may become unstable in a CLAD at a sending end. The occurrence of switching of a network synchronization clock which the CLAD receives is supposed to be a factor in this phenomenon. In the network system shown in Fig. 2, for example, it is assumed that the relay I/F 220 is stably receiving a network synchronization clock from the ATM network 100. Even in this situation there is, for example, a case where the operation of a PLO in the relay I/F 220 which transmits the network synchronization clock to the CLAD 210 becomes unstable and where switching to a spare PLO is performed. When this switching is performed, the following problem, for example, arises. Phase deviation of the received clock occurs in the CLAD 210 or the CLAD 210 does not receive the clock for a period. Accordingly, notice of timing at which switching of the network synchronization clock is performed is received, and replacement is performed so as to stabilize RTSes generated only during a certain period after the notice. By doing so, deterioration in the quality of a source signal reproduced at the receiving end can be prevented.

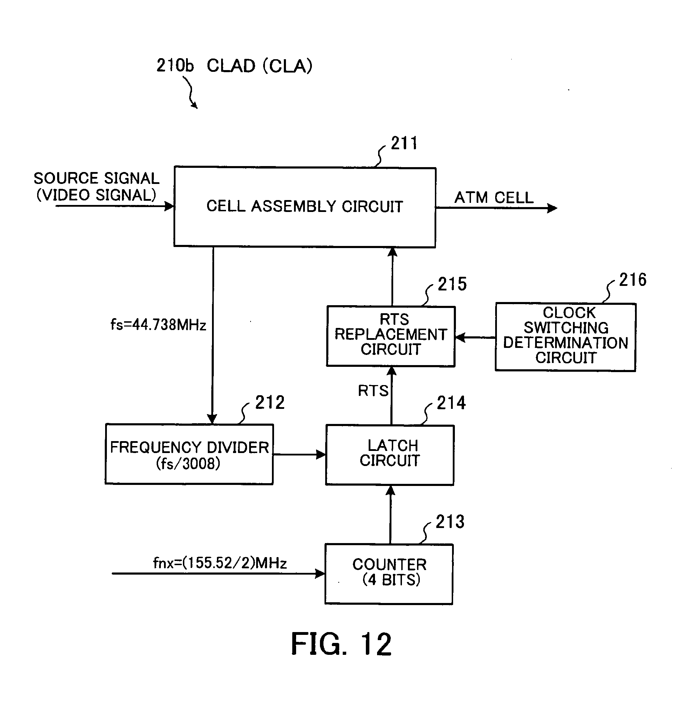

Fig. 12 is a view showing the internal structure of a CLAD of an ATM unit 200 at a sending end in a network system according to a third embodiment of the present invention. Components in Fig. 12 that are the same as those shown in Fig. 9 are marked with the same symbols and descriptions of them will be omitted.

A CLAD 210b shown in Fig. 12 is obtained by adding a clock switching determination circuit 216 to the CLAD 210a shown in Fig. 9. The clock switching determination circuit 216 determines whether or not switching of an output source of an network synchronization clock inputted occurs. The clock switching determination circuit 216 determines the occurrence of switching by, for example, receiving notice of switching of a device which relays the network synchronization clock from the relay I/F 220. Alternatively, the clock switching determination circuit 216 may have the function of monitoring the network synchronization clock received to determine the occurrence of switching.

Usually an RTS replacement circuit 215 outputs RTSes generated by a latch circuit 214 to a cell assembly circuit 211 without replacing them. If the clock switching determination circuit 216 determines the occurrence of switching, then the RTS replacement circuit 215 performs replacement to stabilize the transition of RTSes outputted from the latch circuit 214 during, for example, a certain period after the determination made by the clock switching determination circuit 216. The RTS replacement circuit 215 then outputs the replaced RTSes to the cell assembly circuit 211. There is a case where the clock switching determination circuit 216 has the function of determining that the network synchronization clock is normally received again after the switching. In this case, the following method may be adopted. The RTS replacement circuit 215 begins an RTS replacement process. When the clock switching determination circuit 216 determines that the network synchronization clock is normally received, the RTS replacement circuit 215 receives notice to that effect, stops the RTS replacement process, and transmits RTSes without replacing them.

By performing the above process, a CLAD at the receiving end can stably reproduce a source clock. If the RTS replacement circuit 215 replaces the RTSes, the response characteristics of source clock reproduction operation deteriorate at the receiving end by a period corresponding to a replacement cycle. In this embodiment, however, the RTS replacement circuit 215 replaces the RTSes only during a period in which the network synchronization clock is in an unstable state, so the period by which the response characteristics deteriorate can be minimized.

The following method may be used in place of replacing the RTSes at the sending end. Information indicative of timing at which switching of the network synchronization clock occurs is recorded in predetermined areas of ATM cells and is sent. The CLAD at the receiving end replaces received RTSes according to this information and reproduces the source clock on the basis of the replaced RTSes.

(Fourth Embodiment)

As stated above, the frequency of the network synchronization clock of the ATM network 100 may periodically vary. RTSes also vary periodically according to a variation cycle of the frequency of the network synchronization clock of the ATM network 100. Accordingly, when replacement is performed in order to stabilize the transition of the RTSes, a replacement cycle should be made longer than or equal to a cycle in which the RTSes vary. By doing so, a source clock can stably be reproduced at a receiving end regardless of variations in the network synchronization clock.

However, if the cycle in which the RTSes are replaced is made long in order to stabilize the transition of the RTSes, the response characteristics of the source clock reproduction operation deteriorate. Therefore, it is desirable that the cycle in which the RTSes are replaced should be longer than or equal to the cycle in which the RTSes vary and that the cycle in which the RTSes are replaced shouldbe made as short as possible. Accordingly, in the following fourth embodiment the function of measuring a varying frequency of the network synchronization clock and setting a proper replacement cycle which meets the above condition according to the frequency is given to a CLAD at a receiving end.

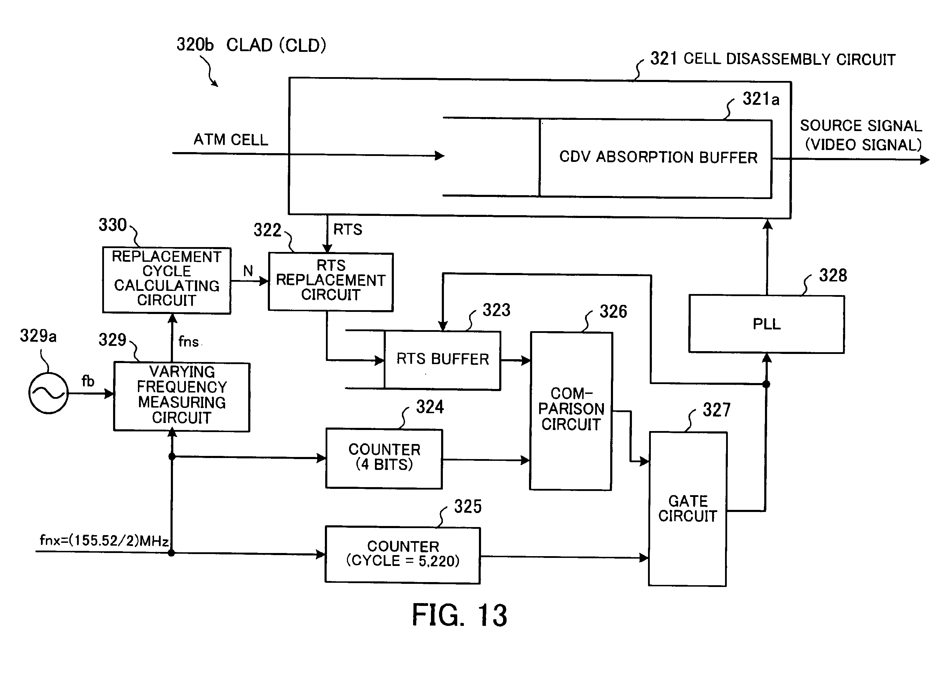

Fig. 13 is a view showing the internal structure of a CLAD of an ATM unit 300 at a receiving end in a network system according to a fourth embodiment of the present invention. Components in Fig. 13 that are the same as those shown in Fig. 5 are marked with the same symbols and descriptions of them will be omitted.

A CLAD 320b shown in Fig. 13 is obtained by adding a varying frequency measuring circuit 329 and a replacement cycle calculating circuit 330 to the CLAD 320 shown in Fig. 5. The varying frequency measuring circuit 329 measures a varying frequency fns of a clock which is obtained from the network synchronization clock and the reference frequency of which is fnx on the basis of a reference clock which is outputted from an oscillator 329a and the frequency of which is fb. The oscillator 329a is located inside or outside the CLAD 320b. The replacement cycle calculating circuit 330 calculates N which is the number of replaced RTSes corresponding to a replacement cycle according to the measured varying frequency fnx and sets N in an RTS replacement circuit 322.

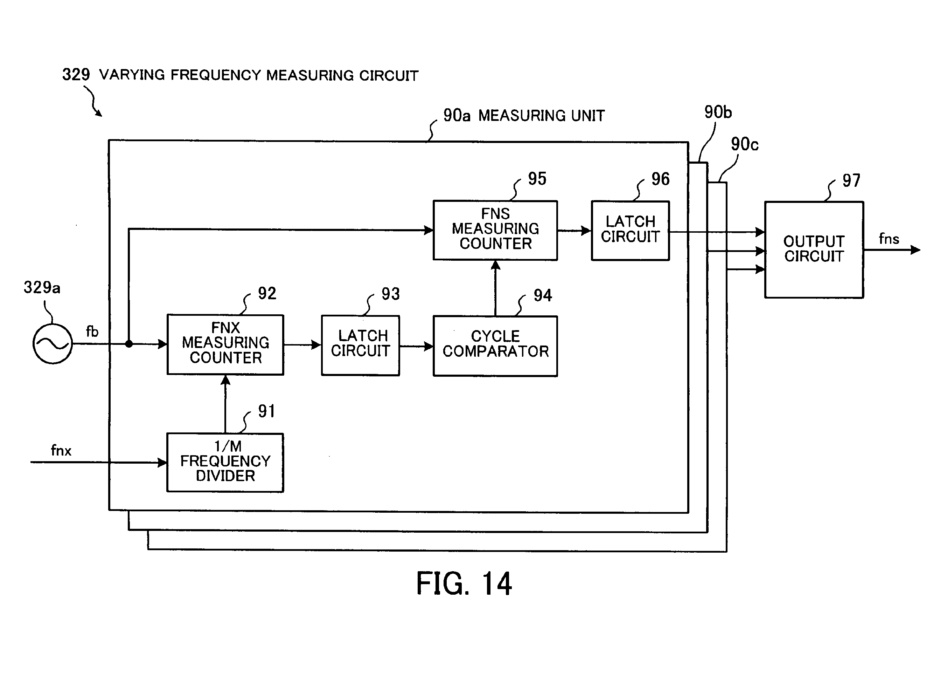

Fig. 14 is a view showing an example of the internal structure of the varying frequency measuring circuit 329.

As shown in Fig. 14, the varying frequency measuring circuit 329 includes aplurality of measuring units 90 (measuring units 90a through 90c in this example) for measuring the varying frequency fns and an output circuit 97 for outputting a value that is the smallest of values sent from the measuring units 90a through 90c as the varying frequency fns.

Each of the measuring units 90a through 90c includes a 1/M frequency divider 91, an fnx measuring counter 92, a latch circuit 93, a cycle comparator 94, an fns measuring counter 95, and a latch circuit 96.

The 1/M frequency divider 91 outputs a frequency-divided clock obtained by frequency-dividing the clock which is obtained from the network synchronization clock and the reference frequency of which is fnx by M. Basically, the frequency division ratio M is 3, 008 which is the block length of a source signal corresponding to an RTS generation interval. However, accuracy with which the reference frequency fnx is measured depends on the frequency division ratio M. Accordingly, different frequency division ratios M are used in the measuring units 90a through 90c. For example, values obtained by 3,008 multiplied by the same number or values obtained by 3,008 divided by the same number are used as the different frequency division ratios M. By doing so, measurement accuracy is improved.

The fnx measuring counter 92 counts the number of the reference clocks which are outputted from the oscillator 329a and the frequency of which is fb, and resets a count value at the time of receiving the frequency-divided clock outputted from the 1/M frequency divider 91. The latch circuit 93 latches the count value just before the resetting of the fnx measuring counter 92. This count value is a value obtained by converting the frequency of the frequency-divided clock by the use of the reference clock the frequency of which is fb.

The cycle comparator 94 uses the following inequalities (5) and (6) for detecting a time interval between varying cycles on the basis of the value outputted from the latch circuit 93.

$$\mathrm{Cnx(m)} > \mathrm{Cnx(m-1)} \geqq \mathrm{Cnx(m-2)} \geqq \ldots \geqq \mathrm{Cnx(m-p)} \quad \ldots\ldots \quad (5)$$

$$\mathrm{Cnx(m)} > \mathrm{Cnx(m+1)} \geqq \mathrm{Cnx(m+2)} \geqq \ldots \geqq \mathrm{Cnx(m+p)} \quad \ldots\ldots \quad (6)$$

where Cnx is the value outputted from the latch circuit 93, m is the number of times 1/M frequency divider 91 makes 1/M frequency division, and p is the number of comparison stages .

If p values outputted from the latch circuit 93 satisfy, for example, the above inequality (5) and the subsequent p values outputted from the latch circuit 93 satisfy inequality (6), then the cycle comparator 94 outputs a pulse to the fns measuring counter 95. If p=1, then inequality (5) is expressed as Cnx (m) > Cnx (m-1) . If p=1, then inequality (6) is expressed as Cnx (m) > Cnx (m+1).

The fns measuring counter 95 counts the number of the reference clocks which are outputted from the oscillator 329a and the frequency of which is fb, and resets a count value at timing at which the cycle comparator 94 outputs the pulse. The latch circuit 96 latches the count value justbefore the resetting of the fns measuring counter 95 and outputs the value to the output circuit 97.

As has been described, the 1/M frequency dividers 91 included in the measuring units 90a through 90c use the different frequency division ratios M for making frequency division. Measured values of the varying frequency (values outputted from the latch circuits 96) corresponding to the frequency division ratios M are outputted from the measuring units 90a through 90c. The output circuit 97 selects a value that is the smallest of these measured values, and outputs it as the varying frequency fns.

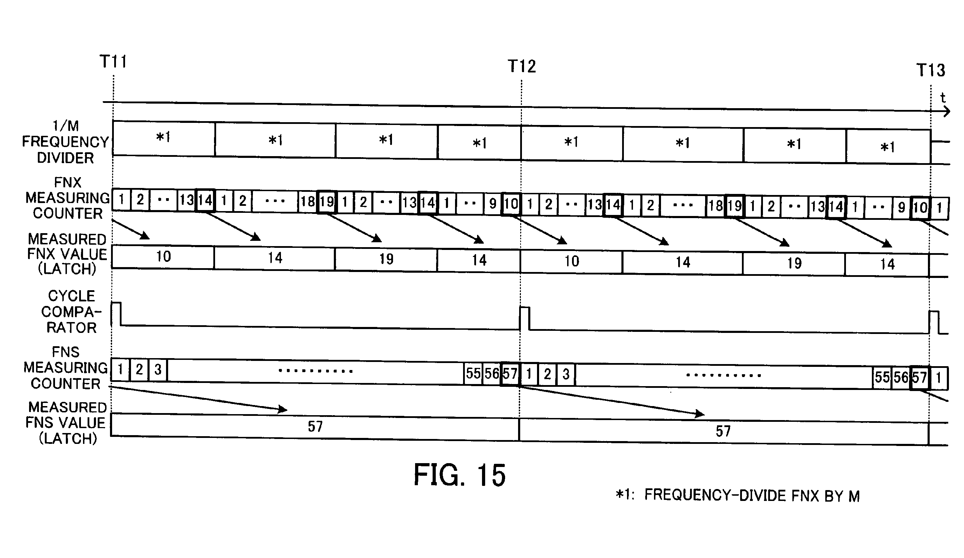

Fig. 15 is a timing chart showing an example of a signal transmitted in the varying frequency measuring circuit 329.

In the example shown in Fig. 15, p=3. In Fig. 15, values outputted from the latch circuit 93 which latches a count value of the fnx measuring counter 92 are not constant. This means that the cycle of the network synchronization clock has become unstable. After a pulse is outputted from the cycle comparator 94 at timing T11, three values outputted from the latch circuit 93 gradually increase and the subsequent three values outputted from the latch circuit 93 gradually decrease. At timing T12 the cycle comparator 94 determines that the inequalities (5) and (6) are satisfied, and outputs a pulse. Similarly, the cycle comparator 94 outputs a pulse at timing T13. A value outputted from the latch circuit 96 at the time of outputting each pulse is "57" . This is a value obtained by converting the varying frequency fns by the use of the reference clock (frequency is fb).

Descriptions will now be reverted to Fig. 13. The replacement cycle calculating circuit 330 sets the number N of replaced RTSes corresponding to an RTS replacement cycle according to the measured varying frequency fns. N can be set by finding r (natural number) which satisfies the following inequality (7).

**[Expression 4]**

$$N = r \times \left\{ rounddown\left(\frac{fnx}{3008 \times fn}\right) + 1 \right\}$$

$$> rounddown\left\{ \frac{1}{\left(\frac{3008 \times fnx}{fs}\right) - rounddown\left(\frac{3008 \times fnx}{fs}\right)} \right\} + 1$$

$$\ldots\ldots (7)$$

A braced portion to the left of a sign of inequality of inequality (7) indicates the number of times an RTS reaches in a varying cycle of the network synchronization clock. A portion to the right of the sign of inequality of inequality (7) indicates a cycle in which RTS differential variations appear in an RTS array including N RTSes. By using inequality (7), a replacement cycle that is longer than or equal to a cycle in which the network synchronization clock varies and that is the smallest possible value can be set.

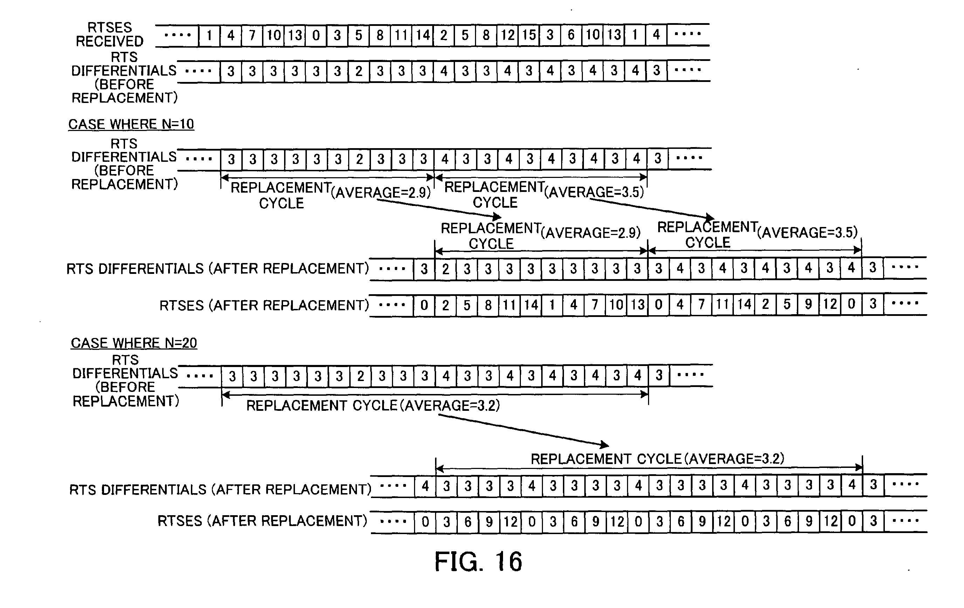

Fig. 16 is a view showing an example of the numeric values of RTSes in the CLAD 320b.

It is assumed that the varying frequency fns is 2.600 Hz. r=1 and N=20 are calculated from inequality (7). In Fig. 16, the total of N, i.e. twenty, differentials between RTSes separated from ATM cells is 64 (in order words, the average of the twenty differentials between the RTSes separated from the ATM cells is 3.2). In this case, the quotient "x" and the remainder "y" included in the above equation (3), for example, are 3 and 4, respectively, in the RTS replacement circuit 322. Points where a variation appears (that is to say, points where an RTS differential obtained by adding 1 to the quotient "x" is located) exist every five values in an array of replaced differentials. By regenerating RTSes by the use of the array of replaced differentials, the transition of the RTSes is stabilized in a period including the cycle in which the network synchronization clock varies.

On the other hand, in the case of N=10, as shown in the middle of Fig. 16, the average of first ten RTS differentials corresponding to a replacement cycle is 2.9. The average of RTS differentials is 3.5 in a period in which the next ten RTSes reach. If RTSes are replaced in this way in a replacement cycle that is shorter than the cycle in which the network synchronization clock varies, then the slopes of straight lines indicative of the transition of RTSes differ among different replacement cycles. Accordingly, the transition of the RTSes is not stabilized sufficiently and there is no guarantee that a source signal can stably be reproduced.

As has been described, in this embodiment the varying frequency fns of the network synchronization clock is measured properly. An RTS replacement cycle is changed according to measurement time so that it will be most suitable. By doing so, the source clock can always be reproduced stably regardless of variations in the network synchronization clock. As a result, the quality of the source signal reproduced can be improved. In addition, by optimizing a replacement cycle, deterioration in the response characteristics of source clock reproduction operation can be minimized.

A technique other than the above varying frequency measuring circuit 329 may be used for performing a function for detecting the stability of the network synchronization clock. An RTS replacement cycle is optimized according to the result of the detection. By doing so, the source clock can always be reproduced stably in spite of various factors in the unstableness of the network synchronization clock.

(Fifth Embodiment)

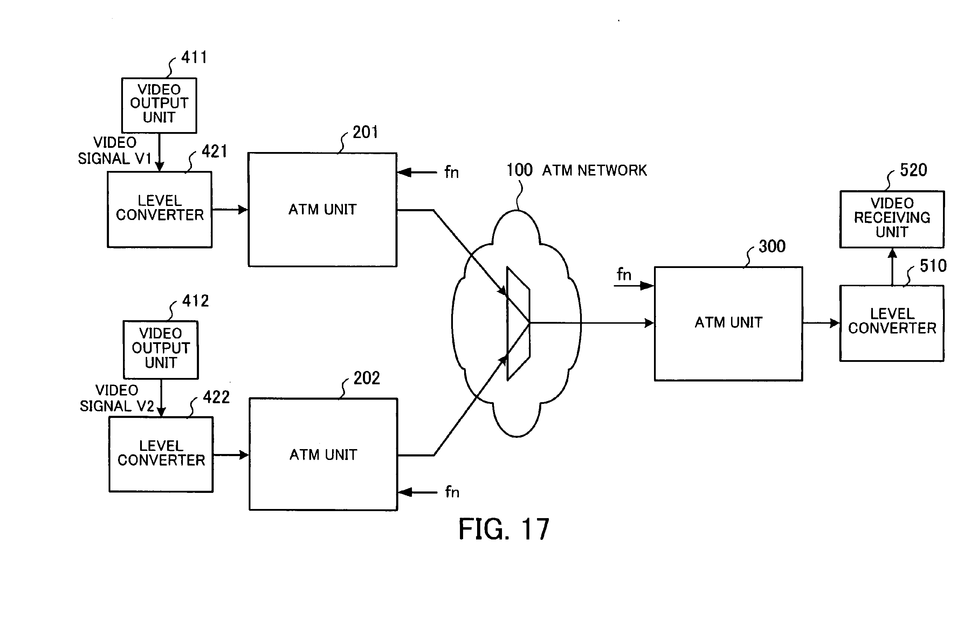

Fig. 17 is a view showing an example of the configuration of a network system according to a fifth embodiment of the present invention. Components in Fig.17 that are the same as those shown in Fig. 2 are marked with the same symbols and descriptions of them will be omitted.

In a network system shown in Fig. 17, two ATM units 201 and 202 for generating ATM cells from a D1 video signal and sending the ATM cells are connected to an ATM network 100. A video signal V1 outputted from a video output unit 411 is inputted to the ATM unit 201 via a level converter 421. A video signal V2 outputted from a video output unit 412 is inputted to the ATM unit 202 via a level converter 422 . Each of the ATM units 201 and 202 includes a CLAD having the CLA function, a relay I/F having the function of an SDH framer, and the like. The ATM units 201 and 202 generate ATM cells from the video signals V1 and V2, respectively, and send the ATM cells to the ATM network 100. This is the same with the ATM unit 200 shown in Fig. 2.

The video signals V1 and V2 sent from the ATM units 201 and 202, respectively, are switched by a relay on the ATM network 100 (or a relay included in the ATM unit 201 or 202) or the like and are supplied to an ATM unit 300 at a receiving end. When the signals sent from the ATM units 201 and 202 are switched, a phase deviation, a change in frequency, or the like may occur in source clocks of the multiplexed source signals (video signals).

In addition, lowering the cutoff frequency of a loop filter in a PLL of the ATM unit 300 at the receiving end is effective especially in stably reproducing the source clocks of the video signals or the like. However, if the cutoff frequency of the loop filter is lowered, it is difficult to track an input signal in the PLL. Accordingly, if switching between the source clocks, for example, occurs in the above way, it is difficult to reproduce a source clock.

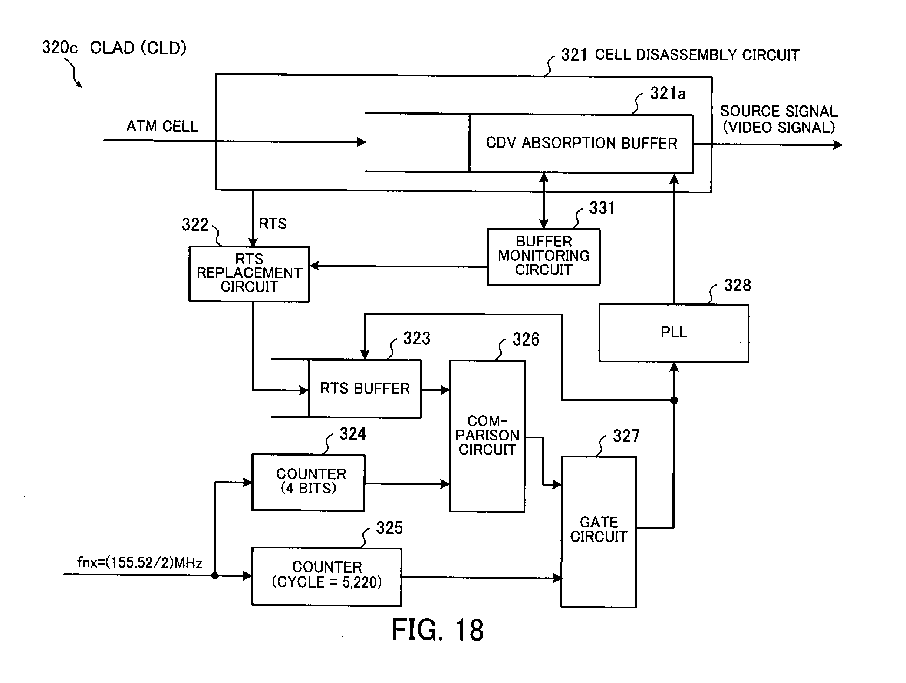

Fig. 18 is a view showing an example of the internal structure of a CLAD of the ATM unit 300 at the receiving end in the network system according to the fifth embodiment of the present invention. Components in Fig. 18 that are the same as those shown in Fig. 5 are marked with the same symbols and descriptions of them will be omitted.

A CLAD 320c shown in Fig. 18 is obtained by adding a buffer monitoring circuit 331 to the CLAD 320 shown in Fig. 5. The buffer monitoring circuit 331 monitors a CDV absorption buffer 321a included in a cell disassembly circuit 321. When an underflow occurs in the CDV absorption buffer 321a, the buffer monitoring circuit 331 determines that switching between source clocks has occurred, and outputs a determination signal to an RTS replacement circuit 322. In addition, thebuffermonitoring circuit 331 exercises control so that until the amount of data stored in the CDV absorption buffer 321a reaches a predetermined amount thereafter, sending data from the CDV absorption buffer 321a will be put into a wait state. When the amount of data stored in the CDV absorption buffer 321a recovers, notice to that effect may be given to the RTS replacement circuit 322.

Usually the RTS replacement circuit 322 performs the above process to replace RTSes separated by a cell disassembly circuit 321 in a predetermined replacement cycle. This replacement cycle is set to a value greater than or equal to a frequency in which a network synchronization clock varies. When the RTS replacement circuit 322 receives the determination signal indicative of the switching between the source clocks from the buffer monitoring circuit 331, the RTS replacement circuit 322 temporarily shortens the replacement cycle and then returns the replacement cycle gradually to the original length. Until the buffer monitoring circuit 331 informs the RTS replacement circuit 322 that the amount of data stored in the CDV absorption buffer 321a has recovered, the replacement cycle may remain short.

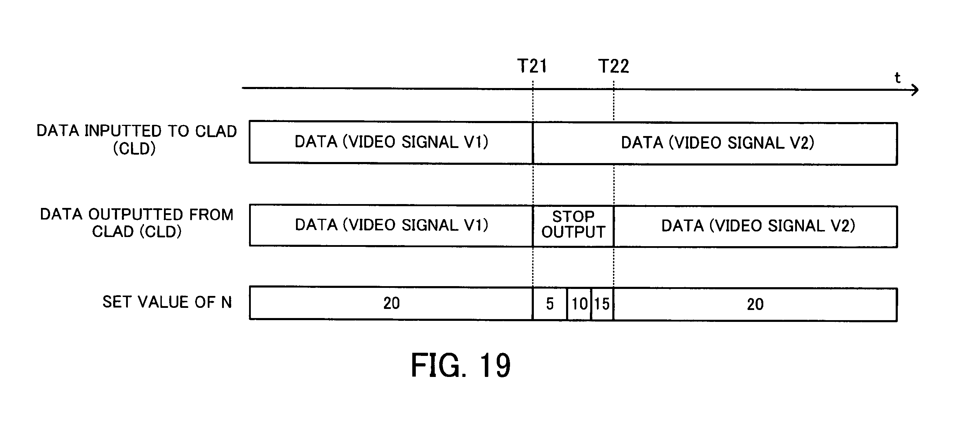

Fig. 19 is a timing chart showing an example of input-output data and a replacement cycle set in the CLAD 320c.

In Fig. 19, a sending source of the source signal is switched in a state in which the video signal V1, for example, sent from the ATM unit 201 is received as ATM cells. At timing T21 the buffer monitoring circuit 331 detects this switching. At this time the buffer monitoring circuit 331 exercises controls to stop output from the CDV absorption buffer 321a and to reduce the number N of RTSes corresponding to a replacement cycle in the RTS replacement circuit 322 from 20 to 5.

The receiving of the video signal V2 after the switching is then begun. At the timing T22 when the amount of data stored in the CDV absorption buffer 321a reaches a predetermined threshold, the buffer monitoring circuit 331 exercises controls to begin sending data again from the CDV absorption buffer 321a. The set value of N in the RTS replacement circuit 322 is gradually increased from timing T21 to timing T22. At timing T22 when the sending of, for example, the video signal V2 is begun, the value of N returns to 20.

Even if the cutoff frequency of the loop filter in the PLL 328 is comparatively high, the source clock can always be reproduced stably by performing the above process. Usually one video signal such as V1 or V2 is continuously received. At this time the replacement cycle in the RTS replacement circuit 322 is lengthened. Replacement is performed so that RTSes will always make stable transitions. Therefore, even if the cutoff frequency of the loop filter included in the PLL 328 is high, a stable source clock including only a small number of jitters can be reproduced and deterioration in the quality of a video signal reproduced can be prevented.

If a source clock is switched because of, for example, the replacement of an ATM unit at an sending end, the buffer monitoring circuit 331 detects this switching and shortens the RTS replacement cycle. At this time an input clock cycle varies in the PLL 328 in a cycle which is shorter than a normal cycle. However, the use of a loop filter the cutoff frequency of which is high makes it easy to track an input clock. Accordingly, even after the source clock is switched, a stable source clock can be reproduced in a short period of time. After that, the source clock is reproduced on the basis of RTSes replaced again in a long cycle, and a source signal can be reproduced correctly.

In the above fifth embodiment, the buffer monitoring circuit 331 monitors the occurrence of an underflow in the CDV absorption buffer 321a and detects the switching between the source clocks. However, another detectionmethodmaybe adopted. For example, the switching between the source clocks is detected by a switching notice signal sent from a unit at a sending end, a switching unit, or the like.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

DESCRIPTION OF THE SYMBOLS

10    cell disassembly unit
11    timing information separation circuit
12    timing information replacement circuit
13    clock generation circuit
14    source signal output circuit
20    cell assembly unit
30    network


**Claims**

1.  A cell disassembly unit for separating and reproducing a source signal having a clock which is asynchronous to a network from fixed length cells received via the network, the unit comprising:

    a timing information separation circuit for separating transmission timing information which is obtained by converting transmission timing in each constant period of the clock of the source signal by the use of transmission timing of a synchronization clock of the network from the fixed length cells received;
    a timing information replacement circuit for averaging differentials between adjacent pieces of transmission timing information sent from the timing information separation circuit every predetermined period and for replacing the transmission timing information on the basis of an average differential; and
    a clock generation circuit for generating the clock of the source signal on the basis of the replaced transmission timing information.

2.  The cell disassembly unit according to claim 1, wherein the timing information replacement circuit averages the differentials between the adjacent pieces of transmission timing information by totaling a predetermined number of differentials between the adjacent pieces of transmission timing information, by generating an array in which a quotient obtained by dividing a total by the predetermined number is arranged by the predetermined number, and by dispersedly adding values obtained by dividing a remainder obtained by dividing the total by the predetermined number into smallest units of a bit number of the transmission timing information to the array.

3.  The cell disassembly unit according to claim 1, wherein the timing information replacement circuit makes the predetermined period in which the differentials between the adjacent pieces of transmission timing information are averaged longer than or equal to a cycle of variations in a frequency of the synchronization clock of the network.

4.  The cell disassembly unit according to claim 1, further comprising a stability detection circuit for detecting stability of the synchronization clock of the network, wherein the timing information replacement circuit changes the predetermined period in which the differentials between the adjacent pieces of transmission timing information are averaged according to a result of detection by the stability detection circuit.

5.  The cell disassembly unit according to claim 4, wherein:

    a measuring circuit for measuring a cycle of variations in a frequency of the synchronization clock of the network is included as the stability detection circuit; and
    the timing information replacement circuit makes the predetermined period in which the differentials between the adjacent pieces of transmission timing information are averaged longer than or equal to the cycle of the variations measured by the measuring circuit.

6.  The cell disassembly unit according to claim 1, further comprising a switching detection circuit for detecting switching of the source signal multiplexed into the cells, wherein if the switching detection circuit determines that the switching of the source signal occurs, the timing information replacement circuit temporarily shortens the predetermined period in which the differentials between the adjacent pieces of transmission timing information are averaged.

7.  The cell disassembly unit according to claim 1, wherein the clock generation circuit includes a PLL circuit for accepting input of a clock a cycle of which is indicated by the replaced transmission timing information and for generating the clock of the source signal.

8. A cell assembly unit for multiplexing a source signal having a clock which is asynchronous to a network used for transmission into fixed length cells and for sending the fixed length cells to the network, the unit comprising:

a timing information generation circuit for generating transmission timing information which is obtained by converting transmission timing in each constant period of the clock of the source signal by the use of transmission timing of a synchronization clock of the network;

a timing information replacement circuit for averaging differentials between adjacent pieces of transmission timing information sent from the timing information generation circuit every predetermined period and for replacing the transmission timing information on the basis of an average differential; and

a cell multiplexing circuit for multiplexing the source signal and the transmission timing information replaced into the cells.

9. The cell assembly unit according to claim 8, wherein the timing information replacement circuit averages the differentials between the adjacentpieces of transmission timing information by totaling a predetermined number of differentials between the adjacent pieces of transmission timing information, by generating an array in which a quotient obtained by dividing a total by the predetermined number is arranged by the predetermined number, and by dispersedly adding values obtained by dividing a remainder obtained by dividing the total by the predetermined number into smallest units of a bit number of the transmission timing information to the array.

10. The cell assembly unit according to claim 8, further comprising a clock switching determination circuit for determining whether output switching of the synchronization clock of the network inputted to the cell assembly unit has occurred, wherein:

if the clock switching determination circuit determines that the output switching has occurred, the timing information replacement circuit begins replacing the transmission timing information; and

until the clock switching determination circuit determines that the output switching has occurred, the timing information replacement circuit outputs the transmission timing information to the clock generation circuit without replacing the transmission timing information.

11. The cell assembly unit according to claim 8, wherein the timing information replacement circuit makes the predetermined period in which the differentials between the adjacent pieces of transmission timing information are averaged longer than or equal to a cycle of variations in a frequency of the synchronization clock of the network.

12. A clock reproduction method for receiving fixed length cells into which a source signal is multiplexed via a network and for reproducing a clock of the source signal which is asynchronous to the network, wherein:

a timing information separation circuit separates transmission timing information which is obtainedby converting transmission timing in each constant period of the clock of the source signal by the use of transmission timing of a synchronization clock of the network from the fixed length cells received;

a timing information replacement circuit averages differentials between adjacent pieces of transmission timing information sent from the timing information separation circuit every predetermined period and replaces the transmission timing information on the basis of an average differential; and

a clock generation circuit generates the clock of the source signal on the basis of the replaced transmission timing information.

FIG. 1

EP 1 863 216 A1

FIG. 2

SAR–PDU HEADER

ATM CELL: ATM HEADER | | Information Field

B8 B7 B6 B5 B4 B3 B2 B1

CSI | SC | CB | EP

SN | SNP

FIG. 3A

ATM CELL

SC=0 SC=1 SC=2 SC=3 SC=4 SC=5 SC=6 SC=7

MSB LSB

RTS (4 BITS)

FIG. 3B

210 CLAD (CLA)

SOURCE SIGNAL
(VIDEO SIGNAL)

211

CELL ASSEMBLY CIRCUIT

ATM CELL

fs=44.738MHz

RTS

212

FREQUENCY DIVIDER
(fs/3008)

214

LATCH
CIRCUIT

213

fnx=(155.52/2)MHz

COUNTER
(4 BITS)

FIG. 4

FIG. 5

EP 1 863 216 A1

EP 1 863 216 A1

RTSES RECEIVED ···· | 0 | 4 | 8 | 11 | 14 | 1 | 4 | 7 | 10 | 13 | 0 | 2 | 5 | 11 | 13 | 0 | 3 | 7 | 10 | 12 | 0 | 4 | ····

RTS DIFFERENTIALS (BEFORE REPLACEMENT)   ···· | 4 | 4 | 3 | 3 | 3 | 3 | 3 | 3 | 3 | 3 | 2 | 3 | 6 | 2 | 3 | 3 | 4 | 3 | 2 | 4 | 4 | ····

0 −1 0 0 0 0 0 0 0 −1 +1 +3 −4 +1 0 +1 −1 −1 +2 0

REPLACEMENT(AVERAGE=3.2) CYCLE    REPLACEMENT(AVERAGE=3.2) CYCLE

DIVIDED INTO QUOTIENT "X" AND REMAINDER "Y"

REPLACEMENT CYCLE    REPLACEMENT CYCLE

ARRAY OF QUOTIENT "X" ···· | 3 | 3 | 3 | 3 | 3 | 3 | 3 | 3 | 3 | 3 | 3 | 3 | 3 | 3 | 3 | 3 | 3 | 3 | 3 | 3 | 3 | ····

+                +

ARRAY OF ADDED VALUES CORRESPONDING TO REMAINDER "Y" (REFER TO CONVERSION TABLE)   ···· | 0 | 1 | 0 | 0 | 0 | 0 | 1 | 0 | 0 | 0 | 0 | 1 | 0 | 0 | 0 | 0 | 1 | 0 | 0 | 0 | 1 | ····

↓                ↓

REPLACEMENT CYCLE    REPLACEMENT CYCLE

RTS DIFFERENTIALS (AFTER REPLACEMENT)   ···· | 3 | 4 | 3 | 3 | 3 | 3 | 4 | 3 | 3 | 3 | 3 | 4 | 3 | 3 | 3 | 3 | 4 | 3 | 3 | 3 | 3 | 4 | ····

+1 −1 0 0 0 +1 −1 0 0 0 +1 −1 0 0 0 +1 −1 0 0 0

RTS (AFTER REPLACEMENT) ···· | 0 | 4 | 7 | 11 | 13 | 0 | 4 | 7 | 11 | 13 | 0 | 4 | 7 | 11 | 13 | 0 | 4 | 7 | 11 | 13 | 0 | 4 | ····

## FIG. 6

| | | nTH ($n \leqq N$) ADDED VALUE | | | | | | | | | |
|---|---|---|---|---|---|---|---|---|---|---|---|
| | | 1 | 2 | 3 | 4 | 5 | 6 | 7 | 8 | 9 | 10 |
| REMAINDER "Y" | 0 | 0 | 0 | 0 | 0 | 0 | 0 | 0 | 0 | 0 | 0 |
| | 1 | 1 | 0 | 0 | 0 | 0 | 0 | 0 | 0 | 0 | 0 |
| | 2 | 1 | 0 | 0 | 0 | 0 | 1 | 0 | 0 | 0 | 0 |
| | 3 | 1 | 0 | 0 | 1 | 0 | 0 | 1 | 0 | 0 | 0 |
| | 4 | 1 | 0 | 1 | 0 | 0 | 1 | 0 | 1 | 0 | 0 |
| | 5 | 1 | 0 | 1 | 0 | 1 | 0 | 1 | 0 | 1 | 0 |
| | 6 | 1 | 1 | 0 | 1 | 0 | 1 | 1 | 0 | 1 | 0 |
| | 7 | 1 | 1 | 0 | 1 | 1 | 0 | 1 | 1 | 1 | 0 |
| | 8 | 1 | 1 | 1 | 1 | 0 | 1 | 1 | 1 | 1 | 0 |
| | 9 | 1 | 1 | 1 | 1 | 1 | 1 | 1 | 1 | 1 | 0 |

# FIG. 7

EP 1 863 216 A1

RTSES RECEIVED ···· | 0 | 4 | 8 | 11 | 14 | 1 | 4 | 7 | 10 | 13 | 0 | 2 | 5 | 11 | 13 | 0 | 3 | 7 | 10 | 12 | 0 | 4 | ····

RTS DIFFERENTIALS (BEFORE REPLACEMENT) ···· | 4 | 4 | 3 | 3 | 3 | 3 | 3 | 3 | 3 | 3 | 2 | 3 | 6 | 2 | 3 | 3 | 4 | 3 | 2 | 4 | 4 | ····

0 −1 0 0 0 0 0 0 0 −1 +1 +3 −4 +1 0 +1 −1 −1 +2 0

REPLACEMENT (AVERAGE=3.2) CYCLE    REPLACEMENT (AVERAGE=3.2) CYCLE

DIVIDED INTO QUOTIENT "X" AND REMAINDER "Y"

REPLACEMENT CYCLE    REPLACEMENT CYCLE

ARRAY OF QUOTIENT "X" ···· | 3 | 3 | 3 | 3 | 3 | 3 | 3 | 3 | 3 | 3 | 3 | 3 | 3 | 3 | 3 | 3 | 3 | 3 | 3 | 3 | 3 | ····

+    +

ARRAY OF ADDED VALUES CORRESPONDING TO REMAINDER "Y" (PERFORM CALCULATION) ···· | 1 | 0 | 0 | 0 | 0 | 1 | 0 | 0 | 0 | 0 | 1 | 0 | 0 | 0 | 0 | 1 | 0 | 0 | 0 | 0 | 1 | 0 | ····

↓    ↓

REPLACEMENT CYCLE    REPLACEMENT CYCLE

RTS DIFFERENTIALS (AFTER REPLACEMENT) ···· | 4 | 3 | 3 | 3 | 3 | 4 | 3 | 3 | 3 | 3 | 4 | 3 | 3 | 3 | 3 | 4 | 3 | 3 | 3 | 3 | 4 | 3 | ····

−1 0 0 0 +1 −1 0 0 0 +1 −1 0 0 0 +1 −1 0 0 0 +1

RTS (AFTER REPLACEMENT) ···· | 0 | 3 | 6 | 9 | 12 | 0 | 3 | 6 | 9 | 12 | 0 | 3 | 6 | 9 | 12 | 0 | 3 | 6 | 9 | 12 | 0 | 3 | ····

FIG. 8

210a CLAD (CLA)

FIG. 9

RTSES GENERATED · · · · | 3 | 4 | 8 | 11 | 14 | 1 | 4 | 7 | 10 | 13 | 0 | 2 | 5 | 11 | 13 | 0 | 3 | 7 | 10 | 12 | 0 | 4 | · · · ·

RTS DIFFERENTIALS (BEFORE REPLACEMENT) · · · · | 4 | 4 | 3 | 3 | 3 | 3 | 3 | 3 | 3 | 3 | 2 | 3 | 6 | 2 | 3 | 3 | 4 | 3 | 2 | 4 | 4 | · · · ·

0 -1 0 0 0 0 0 0 0 -1 +1 +3 -4 +1 0 +1 -1 -1 +2 0

REPLACEMENT (AVERAGE=3.2) CYCLE   REPLACEMENT (AVERAGE=3.2) CYCLE

REPLACEMENT CYCLE    REPLACEMENT CYCLE

RTS DIFFERENTIALS (AFTER REPLACEMENT) · · · · | 4 | 3 | 3 | 3 | 3 | 4 | 3 | 3 | 3 | 3 | 4 | 3 | 3 | 3 | 3 | 4 | 3 | 3 | 3 | 3 | 4 | 3 | · · · ·

-1 0 0 0 +1 -1 0 0 0 +1 -1 0 0 0 +1 -1 0 0 0 +1

RTS (AFTER REPLACEMENT) · · · · | 0 | 3 | 6 | 9 | 12 | 0 | 3 | 6 | 9 | 12 | 0 | 3 | 6 | 9 | 12 | 0 | 3 | 6 | 9 | 12 | 0 | 3 | · · · ·

FIG. 10

EP 1 863 216 A1

FIG. 11

EP 1 863 216 A1

210b CLAD (CLA)

FIG. 12

320b CLAD (CLD)

321 CELL DISASSEMBLY CIRCUIT

321a

ATM CELL → CDV ABSORPTION BUFFER → SOURCE SIGNAL (VIDEO SIGNAL)

330 REPLACEMENT CYCLE CALCULATING CIRCUIT

322 RTS RTS REPLACEMENT CIRCUIT

329a

329 VARYING FREQUENCY MEASURING CIRCUIT

fns

fb

N

323 RTS BUFFER

326 COM-PARISON CIRCUIT

328 PLL

324 COUNTER (4 BITS)

327 GATE CIRCUIT

325 COUNTER (CYCLE = 5,220)

fnx=(155.52/2)MHz

FIG. 13

FIG. 14

329 VARYING FREQUENCY MEASURING CIRCUIT

90a MEASURING UNIT

90b

90c

95 FNS MEASURING COUNTER

96 LATCH CIRCUIT

97 OUTPUT CIRCUIT

fns

329a

fb

92 FNX MEASURING COUNTER

93 LATCH CIRCUIT

94 CYCLE COMPARATOR

fnx

91 1/M FREQUENCY DIVIDER

EP 1 863 216 A1

FIG. 15

*1: FREQUENCY-DIVIDE FNX BY M

EP 1 863 216 A1

FIG. 16

FIG. 17

EP 1 863 216 A1

FIG. 18

320c CLAD (CLD)

321 CELL DISASSEMBLY CIRCUIT

321a

ATM CELL

CDV ABSORPTION BUFFER

SOURCE SIGNAL (VIDEO SIGNAL)

322 RTS

RTS REPLACEMENT CIRCUIT

331 BUFFER MONITORING CIRCUIT

328 PLL

323 RTS BUFFER

326 COM- PARISON CIRCUIT

324 COUNTER (4 BITS)

327 GATE CIRCUIT

325 COUNTER (CYCLE = 5,220)

fnx=(155.52/2)MHz

EP 1 863 216 A1

EP 1 863 216 A1

|  | T21 | T22 | t |

| DATA INPUTTED TO CLAD (CLD) | DATA (VIDEO SIGNAL V1) | DATA (VIDEO SIGNAL V2) |

| DATA OUTPUTTED FROM CLAD (CLD) | DATA (VIDEO SIGNAL V1) | STOP OUTPUT | DATA (VIDEO SIGNAL V2) |

| SET VALUE OF N | 20 | 5 | 10 | 15 | 20 |

## FIG. 19

## INTERNATIONAL SEARCH REPORT

| International application No. |
| --- |
| PCT/JP2005/005424 |

A. CLASSIFICATION OF SUBJECT MATTER
  Int.Cl⁷ H04L7/00, 12/56

According to International Patent Classification (IPC) or to both national classification and IPC

B. FIELDS SEARCHED

Minimum documentation searched (classification system followed by classification symbols)
  Int.Cl⁷ H04L7/00, 12/56

Documentation searched other than minimum documentation to the extent that such documents are included in the fields searched
  Jitsuyo Shinan Koho        1922-1996   Jitsuyo Shinan Toroku Koho   1996-2005
  Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 9-247157 A  (Hitachi, Ltd.),<br>19 September, 1997 (19.09.97),<br>Full text<br>(Family: none) | 1-12 |
| A | JP 2001-285268 A  (Fujitsu Ltd.),<br>12 October, 2001 (12.10.01),<br>Full text<br>(Family: none) | 1-12 |

☐ Further documents are listed in the continuation of Box C.   ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>  21 June, 2005 (21.06.05) | Date of mailing of the international search report<br>  05 July, 2005 (05.07.05) |
| --- | --- |
| Name and mailing address of the ISA/<br>  Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10242979 A